## Europäisches Patentamt

## European Patent Office

## Office européen des brevets

(11) Veröffentlichungsnummer: **0 019 652 B1**

(12) **EUROPÄISCHE PATENTSCHRIFT**

(45) Veröffentlichungstag der Patentschrift:
15.09.82

(51) Int. Cl.³: **F 23 H 3/02, F 23 C 11/02**

(21) Anmeldenummer: **79102114.0**

(22) Anmeldetag: **26.06.79**

(54) **Rost für eine Wirbelschichtfeuerung.**

(30) Priorität: **30.05.79 CH 5029/79**

(43) Veröffentlichungstag der Anmeldung:
**10.12.80 Patentblatt 80/25**

(45) Bekanntmachung des Hinweises auf die Patenterteilung:
**15.09.82 Patentblatt 82/37**

(84) Benannte Vertragsstaaten:
**BE DE FR SE**

(56) Entgegenhaltungen:
**DE-A-1 526 108**
**DE-A-1 914 567**
**DE-A-2 303 452**
**DE-A-2 539 546**
**DE-B-2 356 058**
**DE-C-912 001**
**DE-C-914 302**
**FR-A-1 512 110**

(73) Patentinhaber: **GEBRÜDER SULZER AKTIENGESELLSCHAFT**, Zürcherstrasse 9, CH-8401 Winterthur (CH)

(72) Erfinder: **Kausche, Robert, Im Geissacker 12, CH-8404 Winterthur (CH)**

(74) Vertreter: **Sparing, Nikolaus, Dipl.-Ing., Rethelstrasse 123, D-4000 Düsseldorf 1 (DE)**

## Rost für eine Wirbelschichtfeuerung

Die Erfindung betrifft einen Rost für eine Wirbelschichtfeuerung.

Ein solcher bekannter Rost besteht aus hitzebeständigem Blech, das über einem Luftkasten angeordnet ist und Luftdurchtrittsöffnungen aufweist. Die Öffnungen sind so klein, daß beim Abstellen der Luftzufuhr zur Wirbelschicht keine wesentliche Menge des körnigen Materials des Wirbelbettes in den Luftkasten eintreten kann. Es ist auch bekannt, den Rost aus abgewinkelten Blechen und Winkelprofilen herzustellen (US-A-4 115 929), indem jeweils ein oberes Winkelprofil dachförmig über einem Luftdurchtrittsschlitz angeordnet ist, der zwischen zwei nach oben abgewinkelten Blechstreifen gebildet ist. Überdies ist bekannt (DE-B2-2 356 058), den Rost als doppelwandige, von einem Kühlmittel durchströmte Kammer auszubilden, die von Luftdurchtrittsdüsen durchsetzt ist.

Alle diese Roste weisen erhebliche Nachteile auf. Der Rost aus hitzebeständigem Blech nimmt Temperaturen an, die lokal sehr unterschiedlich sein können, so daß sich das Blech dann verwirft. Auf jeden Fal ist die Blechtemperatur höher als die Temperatur der benachbarten Wände des Wirbelbettes, sofern diese Wände wassergekühlt sind. Der Rost kann also nur an den benachbarten Wänden anliegen, nicht aber mit diesen Wänden verschweißt werden. Im Randbereich des Rostes kann daher die Luftzufuhr zum Wirbelbett erheblich größer sein als im übrigen Teil des Rostes.

Bei dem aus abgewinkelten Blechen und Winkelprofilen gebildeten Rost ist der Durchströmquerschnitt der Luftschlitze verhältnismäßig groß, was zu instabiler Luftverteilung führen kann. Die Instabilität wird dadurch zusätzlich gefördert, daß die Schlitze, deren Ränder von der durchströmenden Luft stark gekühlt werden, sich weiter öffnen, was wiederum zu einer stärkeren Kühlung der Ränder und weiterem Öffnen der Schlitze führt. Überdies kann auch ein solcher Rost aus Gründen der unterschiedlichen Dehnung nicht starr mit gekühlten Wänden des Wirbelbettes verbunden werden.

Der die gekühlte Kammer enthaltende Rost ist verhältnismäßig teuer in der Herstellung. Er weist außerdem den Mangel auf, daß im Betrieb erhebliche Wärmespannungen auftreten können, weil am oberen Blech der Kammer erheblich höhere Temperaturen auftreten als am unteren Blech, insbesondere dann, wenn als Kühlmittel Wasser verwendet wird und dieses am oberen Blech verdampft.

Der Erfindung liegt die Aufgabe zugrunde, einen für eine Wirbelbettfeuerung bestimmten Rost zu schaffen, der über die gesamte Abmessung des Wirbelbettes bei allen Lasten einen gleichmäßigen Luftdurchtritt ermöglicht, der ohne Verwendung besonders wärmebeständigen Werkstoffes hergestellt werden kann und der sich im Betrieb nur wenig durchbiegt.

Diese Aufgabe wird erfindungsgemäß durch die Merkmale des Kennzeichens des Anspruchs 1 gelöst. Ein besonderer Vorteil dieser Lösung besteht darin, daß in dem Rost die Strömung des Kühlwassers kontrolliert verläuft.

Bei der Weiterbildung des Rostes nach Anspruch 2 ergibt sich der zusätzliche Vorteil, daß der Rost die benachbarten Wände des Wirbelbettes gegen Ausbiegung stützt und daß überdies inkontrollierte Luftdurchtrittsquerschnitte vermieden werden.

Das Merkmal nach Anspruch 3 ergibt eine besonders einfache und kostengünstige Konstruktion.

Die Ausbildung des Rostes nach Anspruch 4 bringt eine zusätzliche Verbilligung der Konstruktion.

Ein Ausführungsbeispiel der Erfindung wird in der folgenden Beschreibung anhand der Zeichnung näher erläutert. Es zeigt

Fig. 1 einen Vertikalschnitt durch einen Abschnitt des erfindungsgemäßen Rostes, wobei die Schnittebene rechtwinklig zu den Rohren verläuft,

Fig. 2 eine Draufsicht auf den Rostabschnitt nach Fig. 1 und

Fig. 3 ebenfalls einen Vertikalschnitt, jedoch parallel zu den Rohrachsen.

Mehrere parallel zueinander und horizontal angeordnete Rohre 1 sind über Stege 2 gasdicht miteinander verschweißt und bilden eine zusammenhängende ebene Rostfläche. In den Stegen 2 sind über die Rostfläche gleichmäßig verteilt, beispielsweise in versetzter Anordnung, eine Vielzahl von Bohrungen 3 vorgesehen, die dem Durchtritt von Verbrennungsluft dienen. Oberhalb jeder Bohrung 3 ist an den beiden jeweils benachbarten Rohren 1 ein rechteckförmiges Deckblech 4 angeschweißt, das sich parallel zum Steg 2 erstreckt und einen Abstand a zum Steg freiläßt. Jedes Deckblech 4 ist — in Richtung der Rohrachsen gemessen — so lang, daß es die Bohrung 3 um mindestens den Abstand a beidseitig überragt. Die Rohre 1 sind von Wasser durchströmt, das in einem Durchlaufsystem zirkuliert. Unterhalb des Rostes ist ein nicht dargestellter Luftkasten vorgesehen, aus dem die Luft den Bohrungen 3 zuströmt.

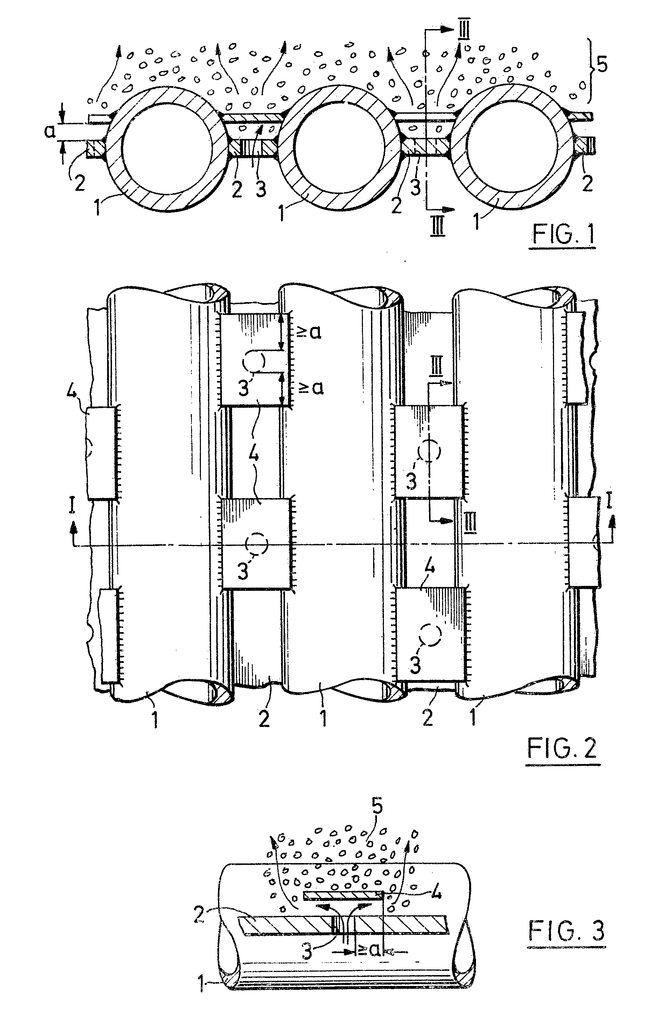

Im Betrieb wird der Rost von unten mit Verbrennungsluft beschickt. Von oben werden dem Rost feinkörnige Kohle sowie Zuschlagstoffe, z. B. Kalk, zugeführt. Bei passender Menge der durch die Löcher 3 zugeführten Luft werden die Kohle und die Zuschlagstoffe zu einem Wirbelbett 5 aufgewirbelt, das auf bekannte Weise in Brand gesetzt wird und dessen Höhe in Fig. 1 und 3 kleiner als üblich gezeichnet ist.

Wird die Luftzufuhr abgestellt, so setzen sich die körnigen Teilchen des Bettes auf dem Rost ab, wobei sich im Bereich unterhalb jedes Deckbleches Böschungen bilden, deren innere Kante die oberen Kanten der Bohrungen 3 nicht erreichen. Ein Durchfallen von Körnern durch die Bohrungen 3 in den unterhalb des Rostes angeordneten Luftkasten ist daher ausgeschlossen.

Die Rohre 1 sind zweckmäßig an einer Seite des Rostes an einen Verteiler angeschlossen und an der gegenüberliegenden Seite als Wandrohre vertikal nach oben geführt.

Beim Herstellen dieser Wand bildet sie zunächst zusammen mit dem Rost ein ebenes Paneel, indem die Rohre 1 des Rostes sich in den Wandrohren geradlinig fortsetzen und ebenso die Stege 2 zwischen den Wandrohren weiterlaufen und zwischen diesen eingeschweißt sind. Anschließend werden im Rostabschnitt des Paneels die Luftdurchtrittsöffnungen 3 gebohrt und die Deckbleche 4 angeschweißt, wonach das Paneel rechtwinklig gebogen wird, so daß dann die Rohrwand senkrecht zum Rost steht.

Statt rechtwinklig kann das Paneel stumpfwinklig gebogen werden, so daß bei vertikaler Rohrwand die Rohre des Rostes leicht steigend verlaufen. Hierdurch wird das Abströmen von Dampfblasen aus den Rohren des Rostes verbessert.

## Patentansprüche

1. Rost für eine Wirbelschichtfeuerung, dadurch gekennzeichnet, daß in der Rostebene parallel verlaufende, über Stege (2) miteinander dicht verschweißte, an ein Wasserdurchlaufsystem angeschlossene Rohre (1) vorgesehen sind, daß die Stege Durchtrittslöcher (3) für die Verbrennungsluft aufweisen und daß jeweils oberhalb der Durchtrittslöcher, mit vertikalem Abstand von dem Steg, an den Rohren Deckbleche angeschweißt (4) sind, die die Durchtrittslöcher — in Achsrichtung der Rohre gemessen — beidseitig um mindestens den Abstand zwischen dem Steg und dem Deckblech überragen.

2. Rost nach Anspruch 1, dadurch gekennzeichnet, daß die dem Rost benachbarten, das Wirbelbett begrenzenden vertikalen Wände ebenfalls aus über Stege dicht verschweißten, parallelen Rohren bestehen und mit dem Rost dicht verschweißt sind.

3. Rost nach einem der Ansprüche 1 und 2, dadurch gekennzeichnet, daß die Rohre des Rostes in mindestens einer der Vertikalwände weiterlaufen.

4. Rost nach einem der Ansprüche 1 bis 3, dadurch gekennzeichnet, daß unterhalb des Rostes ein aus Blech gebildeter Luftkasten angeordnet ist.

## Claims

1. A grate for a fluidizid-bed furnace, characterised in that parallel tubes (1) which are welded together by way of webs (2) so as to be sealing-tight and which are connected to a water passage system are provided in the plane of the grate, the webs are formed with passage apertures (3) for the air for combustion, and cover plates are welded (4) to the tubes in each case above the passage apertures and with vertical spacing from the web, said cover plates extending beyond the passage apertures on either side by an amount which, measured in the axial direction of the tubes, is equal at least to the distance between the web and the cover plate.

2. A grate according to claim 1, characterised in that the vertical walls adjacent the grate and defining the fluidized bed also consist of parallel tubes welded together in sealing-tight relationship via webs, and are welded in sealing-tight relationship to the grate.

3. A grate according to claim 1 or 2, characterised in that the tubes of the grate continue in at least one of the vertical walls.

4. A grate according to any one of claims 1 to 3, characterised in that a sheet-metal air reservoir is disposed beneath the grate.

## Revendications

1. Grille pour un foyer de couche tourbillonnante, caractérisée en ce que dans le plan de la grille sont prévus des tubes (1) s'étendant en parallèle, soudés étroitement l'un à l'autre par des entretoises (2) et raccordés à un système de circulation d'eau, en ce que les entretoises présentent des trous de passage (3) pour l'air de combustion et en ce que sont soudées (4) sur les tubes, respectivement, au-dessus des trous de passage, à une distance verticale de l'entretoise, des tôles de couverture qui, mesuré dans le sens axial des tubes, surplombent les trous de passage des deux côtés, au moins de la distance entre l'entretoise et la tôle de couverture.

2. Grille selon la revendication 1, caractérisée en ce que les parois verticales limitant le lit tourbillonnant, voisines de la grille, sont aussi constituées de tubes parallèles soudés étroitement par des entretoises et sont soudées étroitement à la grille.

3. Grille selon l'une des revendications 1 et 2, caractérisée en ce que les tubes de la grille se poursuivent dans au moins une des parois verticales.

4. Grille selon l'une des revendications 1 à 3, caractérisée en ce qu'une boîte à air faite de tôle est disposée en dessous de la grille.

FIG. 1

FIG. 2

FIG. 3